# EUROPÄISCHE PATENTSCHRIFT

(11) **EP 2 340 098 B1**
(45) Veröffentlichungstag und Bekanntmachung des Hinweises auf die Patenterteilung: **30.11.2016**
(21) Anmeldenummer: 09752277.5
(22) Anmeldetag: 05.10.2009
(51) Int. Cl.: B01D 39/16

(54) **FILTERMEDIUM ZUR PARTIKELFILTRATION**
FILTER MEDIUM FOR PARTICULATE FILTRATION
MILIEU FILTRANT POUR UNE FILTRATION DE PARTICULES

(30) Priorität: 31.10.2008 DE 102008054137
(43) Veröffentlichungstag der Anmeldung: 06.07.2011
(73) Patentinhaber: Carl Freudenberg KG, 69469 Weinheim (DE)
(72) Erfinder: LAZAREVIC, Alexandra, 69488 Birkenau (DE); BADER, Robert, 69121 Heidelberg (DE); KURZER, Rosemarie, 54472 Burgen (DE); REINHARDT, Heinz, 68535 Erdingen (DE)
(74) Vertreter: Ripper, Monika Sigrid
(86) Internationale Anmeldenummer: PCT/EP2009/007104
(87) Internationale Veröffentlichungsnummer: WO 2010/049052

(56) Entgegenhaltungen:
- EP-A1- 0 338 479
- WO-A1-2008/107006
- WO-A2-2004/028662
- NL-A- 9 401 993

## Beschreibung

### Technisches Gebiet

Die Erfindung betrifft ein Filtermedium gemäß dem Oberbegriff des Patentanspruchs 1.

### Stand der Technik

Aus der EP 0 338 479 A1 ist ein Filtermedium mit einer Papieraussenlage bekannt. Die WO 2008/107 006 A1 offenbart ein glasfaserfreies Filtermedium für HEPA-Anwendungen.

Das NL 9 401 993 A offenbart ein Filtermedium, umfassend eine Trägerlage und eine auf dieser aufgebrachte Mikrofaserlage.

Ein Filtermedium ähnlicher Art ist aus der EP 1 366 791 B1 bereits bekannt. Dort ist auf einer Trägerlage eine Feinstrukturlage aufgebracht, die elektrostatisch versponnene Fasern im Nanometerbereich aufweist. Dieses Filtermedium zeigt jedoch nur ein relativ geringes Staubspeichervermögen. Die bekannten Filtermedien zeigen im Gebrauch einen relativ hohen Druckverlust, einen häufig nicht ausreichenden Fraktionsabscheidegrad und ein nur unzureichendes Staubspeichervermögen für Stäube anthropogener und biogener Art. Insbesondere bei der Filterung von biogenen Partikeln, wie z. B. Sporen oder Pollen, nämlich Blütenpollen, die größer gleich 5 µm sind, werden aber sehr hohe Anforderungen an das verwendete Filtermedium gestellt.

Dabei besteht insbesondere die Anforderung an das Filtermedium, dass bei sehr hohem Abscheidevermögen und einem relativ geringen Druckverlust zwischen Anströmseite und Abströmseite ein hohes Staubspeichervermögen besteht.

### Darstellung der Erfindung

Der Erfindung liegt daher die Aufgabe zu Grunde, ein Filtermedium anzugeben, welches einen relativ geringen Druckverlust bei einem guten Fraktionsabscheidegrad und einem sehr guten Staubspeichervermögen zeigt.

Die vorliegende Erfindung löst die zuvor genannte Aufgabe durch die Merkmale des Patentanspruchs 1.

Erfingdungsgemäß wurde eine hohe und effiziente Partikelabscheidung bei relativ geringen Druckverlusten realisiert. Überraschend hat sich gezeigt, dass insbesondere Pollen, nämlich Blütenpollen in einem Größenbereich von 5 bis 10 µm, mit dem erfindungsgemäßen zweilagigen Filtermedium abgeschieden werden können, ohne dass allzu große Druckverluste zwischen Anströmseite und Abströmseite auftreten.

Die Trägerlage ist erfindungsgemäß als Spinnvlies ausgestaltet und weist endlose Bikomponentenfasern auf. Die zweiten Fasern sind erfindungsgemäß durch ein Meltblown-Verfahren aufgebracht und ebenfalls endlos ausgestaltet. Die Meltblown-Schicht bewirkt überraschend eine hervorragende mechanische Partikelabscheidung, insbesondere eine hervorragende Abscheidung biogener Partikel.

Die Trägerlage weist eine Dicke von 0,6 bis 2,0 mm auf. Überraschend hat sich herausgestellt, dass eine so große Dicke der Trägerlage zu einem relativ geringen Druckverlust führt, obwohl noch eine Meltblown-Schicht, nämlich die Mikrofaserlage, auf der Trägerlage aufgebracht ist.

Die Trägerlage weist eine Porosität von mindestens 70% auf. Besonders bevorzugt könnte die Trägerlage eine Porosität von mindestens 80% aufweisen. Hierdurch wird ein sehr geringer Druckverlust und ein hohes Staubspeichervermögen realisiert. Vor diesem Hintergrund weist die Mikrofaserlage eine Porosität von mindestens 70 %, bevorzugt größer 80 %, auf. Hierdurch wird ein besonders geringer Druckverlust und ein besonders hohes Staubspeichervermögen realisiert.

Obwohl im Gegensatz zum Stand der Technik keine Feinstrukturlage mit mittleren Faserdurchmessern im Nanometerbereich, sondern eine Mikrofaserlage mit mittleren Faserdurchmessern im Mikrometerbereich verwendet wurde, wurden sehr hohe Fraktionabscheidegrade erzielt. Überraschend wurde weiter festgestellt, dass eine Trägerlage aus endlosen Spinnvliesfasern mit relativ hoher Porosität, die durch eine ebenfalls relativ hochporöse Mikrofaserlage sehr geringen Flächengewichts abgedeckt ist, ein außerordentlich hohes Staubspeichervermögen zeigt. Dabei scheidet die Mikrofaserlage vorwiegend mechanisch ab. Der Staub sammelt sich in den großen Poren der Trägerlage und entfaltet zusätzlich eine Filterwirkung, durch welche Feinstäube mit einem sehr guten Fraktionsabscheidegrad abgeschieden werden.

Folglich ist die genannte Aufgabe gelöst.

Die Bikomponentenfasern könnten eine erste Komponente aus einem ersten Polypropylen und eine zweite Komponente aus einem zweiten Polypropylen aufweisen, wobei die Polypropylene unterschiedliche Schmelzpunkt zeigen. Hierdurch können die Bikomponentenfasern als Bindefasern verwendet werden und zugleich aus einem im Wesentlichen materialeinheitlichen Stoff gefertigt werden. Polypropylene lassen sich besonders gut dauerhaft elektrostatisch aufladen.

Vor diesem Hintergrund könnten die Meltblownfasern aus Polypropylen gefertigt sein. Vorteilhaft weist die Trägerlage erste Fasern aus Polypropylen auf und die Mikrofaserlage weist zweite Fasern aus Polypropylen auf. Hierdurch ist ein fester stoffschlüssiger Verbund zwischen der Trägerlage und der Mikrofaserlage realisierbar.

Die Fasern der Trägerlage und der Mikrofaserlage könnten aus Polypropylen, Polyester oder Polycarbonat gefertigt sein. Diese Materialien haben sich als besonders hydrophob und chemisch stabil erwiesen. Des Weiteren zeigen diese Materialien ein hervorragendes Abscheidevermögen in Bezug auf Pollen.

Die Trägerlage könnte erste Fasern mit einem mittleren Durchmesser aufweisen, der im Bereich 20 bis 50 µm liegt. Hierdurch ist eine relativ grobporige Trägerlage realisierbar.

Die Mikrofaserlage könnte zweite Fasern mit einem mittleren Durchmesser aufweisen, der im Bereich 1 bis 15 µm liegt. Überraschend hat sich gezeigt, dass erste und zweite Fasern mit den genannten mittleren Durchmessern ein hohes Abscheidevermögen, bei hohem Staubspeichervermögen und moderaten Druckverlusten bewirken.

Vor diesem Hintergrund könnte die Trägerlage bevorzugt erste Fasern mit einem mittleren Durchmesser aufweisen, der im Bereich größer 20 µm liegt, wobei die Mikrofaserlage zweite Fasern mit einem mittleren Durchmesser aufweist, der im Bereich größer 1 µm bis 15 µm, vorzugsweise im Bereich 5 bis 15 µm, liegt. Hierdurch weist die Mikrofaserlage relativ grobe zweite Fasern auf, die sich ganz wesentlich von Nanofasern einer Feinstrukturlage des Stands der Technik unterscheiden und einen geringen Druckverlust zwischen Anströmseite und Abströmseite bei hohem Staubspeichervermögen bewirken.

Besonders bevorzugt weist die Trägerlage erste Fasern mit einem mittleren Durchmesser auf, der größer 25 µm ist. Hierdurch ist ein grobporiger Aufbau des Filtermediums sichergestellt.

Die Mikrofaserlage könnte ein Flächengewicht von höchstens 20 g/m² aufweisen. Überraschend hat sich herausgestellt, dass diese Materialbelegung Staub und/ oder biogene Partikel in der Trägerlage besonders günstig aufnimmt. Vor diesem Hintergrund könnte die Mikrofaserlage ein Flächengewicht von 1 g/m² bis höchstens 20 g/m² aufweisen. Die Mikrofaserlage könnte besonders bevorzugt ein Flächengewicht von 1 g/m² bis höchstens 10 g/m² aufweisen. Die zweiten Fasern, nämlich die Mikrofasern, bilden bei dieser geringen Materialbelegung überraschend noch eine ausreichend stabile Abdeckschicht der Trägerlage aus, die trotz angreifender Drücke die in der Trägerlage gespeicherten Stäube zurückhält. Überraschend bewirkt eine Mikrofaserlage eines so geringen Flächengewichts von höchstens 10 g/m² eine gute mechanische Abscheidung.

Vor diesem Hintergrund könnte die Trägerlage ein Flächengewicht von 40 bis 200 g/m² aufweisen.

Das Filtermedium könnte eine Höchstzugkraft in Machine-Direction von mindestens 250 N und eine Höchstzugkraft in Cross-Machine-Direction von mindestens 100 N zeigen. Die Werte werden gemäß DIN EN ISO 13934-1 ermittelt. Durch Ausbildung der Trägerlage als Spinnvlies aus endlosen Bikomponentenfasern werden diese guten Festigkeitswerte erzielt. Die Festigkeit erlaubt, das Filtermedium zu falten und zu einem Filterelement, nämlich einem Faltenfilter, zu formen.

Eine Adsorptionslage könnte das Filtermedium als Kombifilter ausrüsten. Die Adsorptionslage kann sich abströmseitig an die Mikrofaserlage anschließen. Durch diese Ausgestaltung können nicht nur Partikel, sondern auch unangenehme Gerüche adsorbiert werden.

Vor diesem Hintergrund könnte die Adsorptionslage Aktivkohlepartikel aufweisen. Das Filtermedium könnte eine Adsorptionslage aus Aktivkohle, Zeolithen oder Ionentauschern aufweisen. Hierdurch können Schadgase wie Kohlenwasserstoffe, SO₂, NOx oder ähnliche adsorbiert werden.

Die Aktivkohlepartikel werden vorzugsweise mit einem Polyolefinkleber mit der Trägerlage und der Mikrofaserlage verklebt. Die Trägerlage und die Mikrofaserlage werden entweder durch punktförmige Stege kalandriert und/oder miteinander ultraschallverschweisst.

Das Flächengewicht der Adsorptionslage könnte 150 bis 500 g/m² und deren Dicke könnte 0,8 bis 3,0 mm betragen. Überraschend sind der genannte Bereich des Flächengewichts und der genannte Bereich der Dicke ausreichend, um den Anforderungen an einen Autoinnenraumfilter gerecht zu werden. Überraschend erhöht die Adsorptionslage den Druckverlust zwischen Anströmseite und Abströmseite nahezu unmerklich und moderat. Ein Filtermedium mit einer Trägerlage, Mikrofaserlage und einer Adsorptionslage kann insbesondere im gefalteten Zustand als Kombifilter verwendet werden, der Partikel und Schadgase adsorbiert.

Die Trägerlage und/ oder die Mikrofaserlage könnten elektrostatisch geladen sein. Vorteilhaft zeigt eine elektrostatisch aufgeladene Tägerlage mit relativ hoher Porosität, die durch eine ebenfalls relativ hochporöse, zusätzlich elektrostatisch aufgeladene Mikrofaserlage sehr geringen Flächengewichts abgedeckt ist, ein außerordentlich hohes Staubspeichervermögen.

Die Adsorptionslage könnte eine Vliesstofflage aufweisen, die elektrostatisch geladen ist. Hierdurch kann auch das Abscheidevermögen eines Kombifilters erhöht werden.

Die Trägerlage könnte aus einem Elektretfiltermaterial gefertigt sein. Hierdurch ist eine elektrostatische Abscheidung von Partikeln ermöglicht, die sich mit der vorwiegend mechanischen Abscheidung der Mikrofaserlage kombinatorisch ergänzt. Dabei weisen die Fasern der Mikrofaserlage mittlere Durchmesser auf, die größer als 1 µm sind.

Ein Filterelement zur Abscheidung von biogenen Partikeln könnte ein flächiges oder gefaltetes Filtermedium nach einem der voranstehenden Ansprüche umfassen. Überraschend hat sich die Verwendung des hier beschriebenen Filtermediums als geeignet erwiesen, biogene Partikel abzuscheiden.

Das Filtermedium eignet sich für Verwendungen in Kraftfahrzeugen, insbesondere zur Herstellung von Autoinnenraumfiltern. Das Filtermedium zeigt überraschend nicht nur hervorragende Fraktionsabscheidegrade für biogene Partikel, die größer gleich 5 µm sind, wie z. B. für Pollen, sondern auch für NaCl-Partikel und andere Feinstäube.

Vor diesem Hintergrund könnte in einer Anordnung, welche ein Filtermedium der hier beschriebenen Art oder ein Filterelement der hier beschriebenen Art umfasst, die Trägerlage anströmseitig und die Mikrofaserlage abströmseitig angeordnet sein. Hierdurch ist überraschend ein Filtrationsverfahren realisierbar, bei welchem ein relativ geringer Druckverlust bei einem guten Fraktionsabscheidegrad und einem sehr guten Staubspeichervermögen erzielbar ist. Überraschend löst sich die filigrane Mikrofaserlage nicht von der Trägerlage ab. Bei einem Filtrationsverfahren kann daher die genannte Anordnung verwendet werden, wobei ein zu filterndes Medium auf die anströmseitige Trägerlage gelenkt wird und wobei das zu filternde Medium abströmseitig durch die Mikrofaserlage geführt wird.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele anhand der Zeichnung und Tabellen zu verweisen.

In Verbindung mit der Erläuterung der bevorzugten Ausführungsbeispiele anhand der Zeichnung und Tabellen werden auch im Allgemeinen bevorzugte Ausgestaltungen und Weiterbildungen der Lehre erläutert.

### Kurzbeschreibung der Zeichnung

In der Zeichnung zeigen
- Fig. 1 a: eine schematische Ansicht eines zweilagigen Filtermediums mit einer Trägerlage und einer Mikrofaserlage, wobei der Pfeil die Antrömrichtung angibt,
- Fig. 1b: eine schematische Ansicht eines zweilagigen Filtermediums mit einer Trägerlage, einer Mikrofaserlage und einer zusätzlichen Adsorptionslage, wobei der Pfeil die Antrömrichtung angibt,
- Fig. 2a: eine rasterelektronenmikroskopische Aufnahme eines erfindungsgemäßen Filtermediums aus Polypropylen,
- Fig. 2b: eine weitere rasterelektronenmikroskopische Aufnahme eines erfindungsgemäßen Filtermediums, wobei gezeigt ist, dass eine relativ voluminöse Trägerlage von einer sehr dünnen Meltblown-Schicht abgedeckt ist,
- Fig. 3: zeigt ein Diagramm, in welchem der Druckverlust bei einem Kombifilter mit einem hier beschriebenen, gefalteten Filtermedium mit dem Druckverlust bei einem Kombifilter mit einem gefalteten Standardmaterial verglichen wird,
- Fig. 4: zeigt ein Diagramm, in welchem der Fraktionsabscheidegrad eines Kombifilters mit einem hier beschriebenen, gefalteten Filtermedium mit dem Fraktionsabscheidegrad eines Kombifilters mit einem gefalteten Standardmaterial verglichen wird,
- Fig. 5: zeigt ein Diagramm, in welchem das Staubspeichervermögen eines Kombifilters mit einem hier beschriebenen, gefalteten Filtermedium dargestellt ist,
- Fig. 6: zeigt ein Diagramm, in welchem der Druckverlust bei einem Partikelfilter mit einem hier beschriebenen, gefalteten Filtermedium mit dem Druckverlust bei einem Partikelfilter mit einem gefalteten Standardmaterial verglichen wird,
- Fig. 7: zeigt ein Diagramm, in welchem der Fraktionsabscheidegrad eines Partikelfilters mit einem hier beschriebenen, gefalteten Filtermedium mit dem Fraktionsabscheidegrad eines Partikelfilters mit einem gefalteten Standardmaterial verglichen wird,
- Fig. 8: zeigt ein Diagramm, in welchem das Staubspeichervermögen eines Partikelfilters mit einem hier beschriebenen, gefalteten Filtermedium mit dem Staubspeichervermögen eines Partikelfilters mit einem gefalteten Standardmaterial verglichen wird, und
- Fig. 9: eine schematische Ansicht eines Filterelements mit einem gefalteten Filtermedium.

### Ausführung der Erfindung

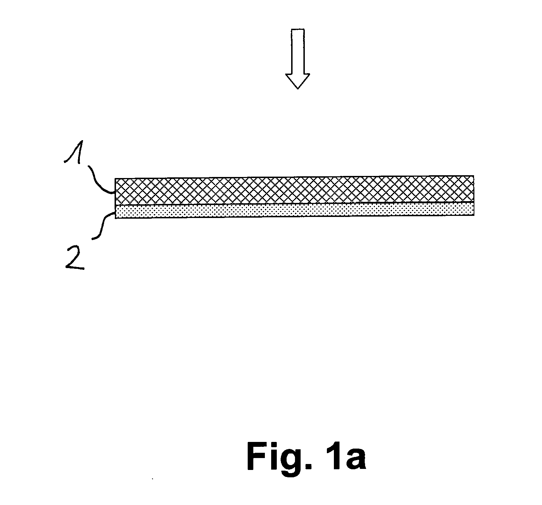

Fig. 1a zeigt schematisch ein Filtermedium mit einer Trägerlage 1 und einer Mikrofaserlage 2. Der Pfeil zeigt die Anströmrichtung des mit Staub beladenen zu filternden Fluids. Das zu filternde Fluid trifft auf die Trägerlage 1, welche der Anströmseite zugewandt ist. Die Mikrofaserlage 2 ist der Abströmseite zugewandt. Die Trägerlage 1 ist elektrostatisch geladen und scheidet Partikel elektrostatisch ab. Die Mikrofaserlage 2 scheidet Partikel vorwiegend mechanisch ab.

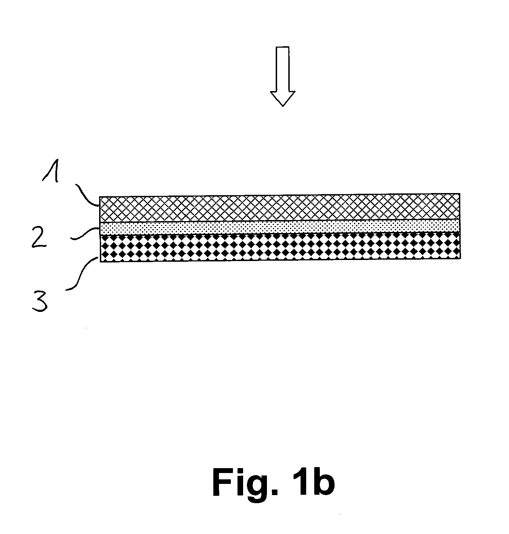

Fig. 1 b zeigt schematisch ein Filtermedium, das aus einer Trägerlage 1, einer Mikrofaserlage 2 und einer Adsorptionslage 3 besteht. An die Mikrofaserlage 2 schließt sich eine Adsorptionslage 3 an. Der Pfeil zeigt die Anströmrichtung des mit Staub beladenen zu filternden Fluids. Das zu filternde Fluid trifft auf die Trägerlage 1, welche der Anströmseite zugewandt ist. Die Mikrofaserlage 2 ist der Abströmseite zugewandt. Die Trägerlage 1 ist elektrostatisch geladen und scheidet Partikel elektrostatisch ab. Die Mikrofaserlage 2 scheidet Partikel vorwiegend mechanisch ab.

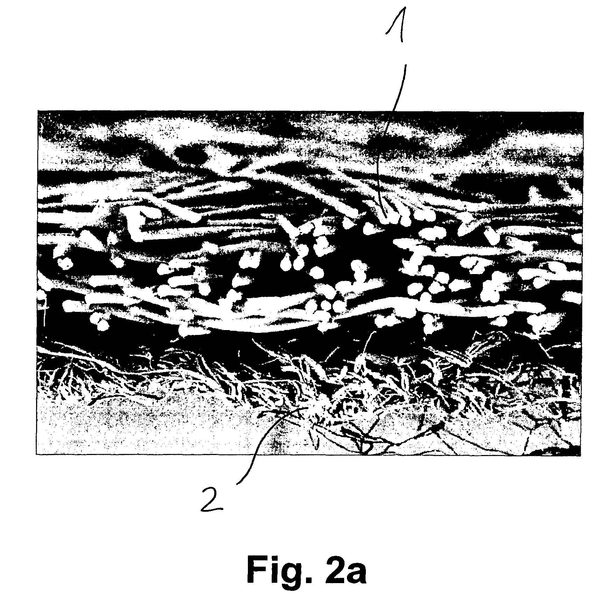

Fig. 2a zeigt eine rasterelektronenmikroskopische Aufnahme eines flächigen Filtermediums. Die endlosen Fasern der Trägerlage 1 und der Mikrofaserlage 2 sind aus Polypropylen gefertigt. Die Trägerlage 1 ist elektrostatisch geladen und scheidet Partikel elektrostatisch ab. Die Mikrofaserlage 2 wurde durch ein Meltblown-Verfahren auf die Trägerlage 1 aufgebracht. Die Mikrofaserlage 2 scheidet Partikel vorwiegend mechanisch ab. Die endlosen ersten Fasern der Trägerlage 1 sind als endlose Bikomponenten-Spinnvliesfasern ausgestaltet. Die Bikomponentenfasern weisen eine erste Komponente aus einem ersten Polypropylen und eine zweite Komponente aus einem zweiten Polypropylen auf, wobei die Polypropylene unterschiedliche Schmelzpunkte zeigen. Die endlosen zweiten Fasern der Mikrofaserlage 2 sind als Meltblownfasern aus Polypropylen ausgestaltet.

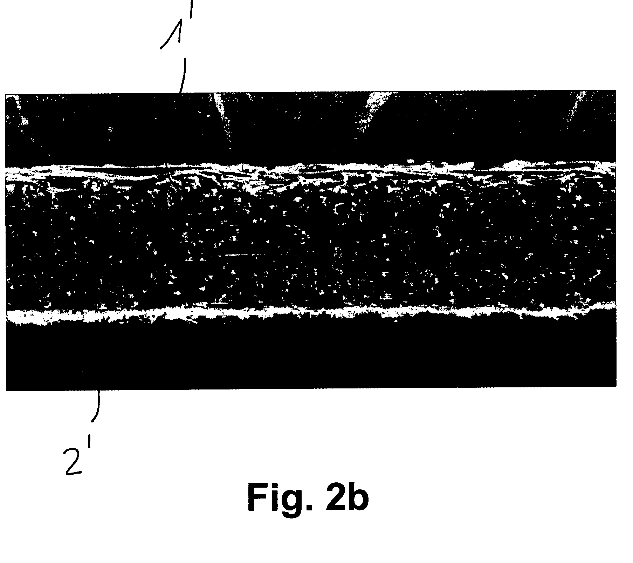

Fig. 2b zeigt eine rasterelektronenmikroskopische Aufnahme eines flächigen Filtermediums. Bei diesem Ausführungsbeispiel ist die Trägerlage 1' weit dicker ausgebildet als die Mikrofaserlage 2'.

In den Tabellen und Diagrammen, auf die hiermit ausdrücklich verwiesen wird, sind die Werte für Druckverluste, Fraktionsabscheidegrade und Staubspeichervermögen angegeben.

Soweit in den Tabellen von zweilagigem Material die Rede ist, ist stets ein erfindungsgemäßes Filtermedium gemeint, welches zumindest eine Trägerlage 1 und eine Mikrofaserlage 2 aufweist.

Dabei wurden zwei Ausführungsbeispiele, nämlich ein Partikelfilter und ein Kombifilter mit einem gefalteten, hier beschriebenen erfindungsgemäßen Filtermedium untersucht und jeweils mit Kombifiltern bzw. Partikelfiltern mit gefalteten Standardmaterialien verglichen.

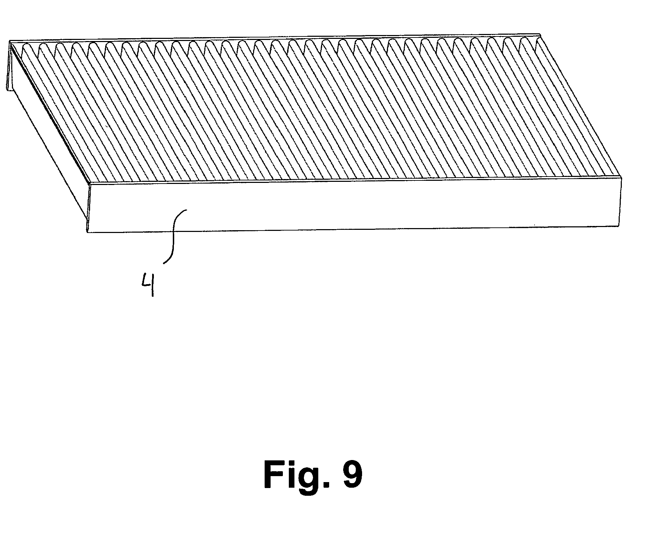

Für den Partikelfilter wurde ein Filtermedium verwendet, das aus einem Verbund aus einer Trägerlage 1 und einer Mikrofaserlage 2 bestand. Die Dicke des Verbunds aus Trägerlage 1 und Mikrofaserlage 2 betrug 0,96 mm. Das Flächengewicht des Verbunds betrug 140 g/m². Die ersten Fasern wiesen einen mittleren Durchmesser von 35 µm und die zweiten Fasern einen mittleren Durchmesser von 5 µm auf. Dieser Verbund wurde zur Herstellung eines Partikelfilters gefaltet und als Filterelement 4 gemäß Fig. 9 ausgestaltet.

Für den Kombifilter wurde ein Filtermedium verwendet, das aus einem Verbund aus einer Trägerlage 1, einer Mikrofaserlage 2 und einer abströmseitig auf der Mikrofaserlage 2 aufgebrachten Adsorptionslage 3 bestand. Der Teilverbund aus Trägerlage 1 und Mikrofaserlage 2 wies eine Dicke von 0,65 mm, ein Flächengewicht von 74 g/m², erste Fasern mit einem mittleren Durchmesser von 25 µm und zweite Fasern mit einem mittleren Durchmesser von 5 µm auf. Die Adsorptionslage 3 wies eine Dicke von 1,1 mm und ein Flächengewicht von 370 g/m² auf. Der Verbund aus Trägerlage 1, Mikrofaserlage 2 und Adsorptionslage 3 wurde zur Herstellung eines Kombifilters gefaltet und als Filterelement 4 gemäß Fig. 9 ausgestaltet.

Die Fasern der Trägerlagen 1 und Mikrofaserlagen 2 der Ausführungsbeispiele wurden aus Polypropylen gefertigt. Die Bikomponentenfasern der Trägerlagen 1 bestehen aus Polypropylenkomponenten mit unterschiedlichen Schmelzpunkten. Die Meltblownfasern bestehen ebenfalls aus Polypropylen.

Als Standardmaterial für Vergleichsuntersuchungen wurde für den Partikelfilter das Material AF 933 der Freudenberg Vliesstoffe KG, Weinheim, DE verwendet. Dieses wies eine Dicke von 0,68 mm und ein Flächengewicht von 138 g/m² auf. Dieses Standardmaterial wurde gefaltet und zur Herstellung eines Partikelfilters als Filterelement gemäß Fig. 9 ausgestaltet.

Als Standardmaterial für Vergleichsuntersuchungen wurde für den Kombifilter das Material AF 935 der Freudenberg Vliesstoffe KG, Weinheim, DE verwendet, welches mit einer Adsorptionslage versehen war. Dieses wies eine Dicke von 1,53 mm und ein Flächengewicht von 440 g/m² auf. Dieses Standardmaterial wurde gefaltet und zur Herstellung eines Kombifilters als Filterelement gemäß Fig. 9 ausgestaltet.

Tabelle 1 zeigt zunächst den Druckverlust in Pa zwischen Anströmseite und Abströmseite, den Durchlassgrad in % (100 - Fraktionsabscheidegrad in %) und die Luftdurchlässigkeit bei 200 Pa in l/(min*m²) eines zweilagigen, ungefalteten und flächigen Filtermediums der hier beschriebenen Art ohne Adsorptionslage mit einer Porosität von 80 bis 90% und einer Dicke von 0,6 bis 1 mm. Das flächige, ungefaltete Filtermedium ist gekennzeichnet durch eine Luftdurchlässigkeit von mindestens 1700 l/(min*m²) bei einer Druckdifferenz von 200 Pa zwischen Anströmseite und Abströmseite. Konkret wurden die in Tabelle 1 genannten Werte gemessen.

**Tabelle 1**

| | **2**-**lagiges Material** |
|---|---|
| **Druckverlust [Pa]** | 5 |
| **Durchlassgrad [%]** | 35 |
| **Luftdurchlässigkeit bei 200Pa [l/min m²]** | 2300 |
| **Porosität [%]** | 88 |
| **Dicke Träger [mm]** | 0,65 |

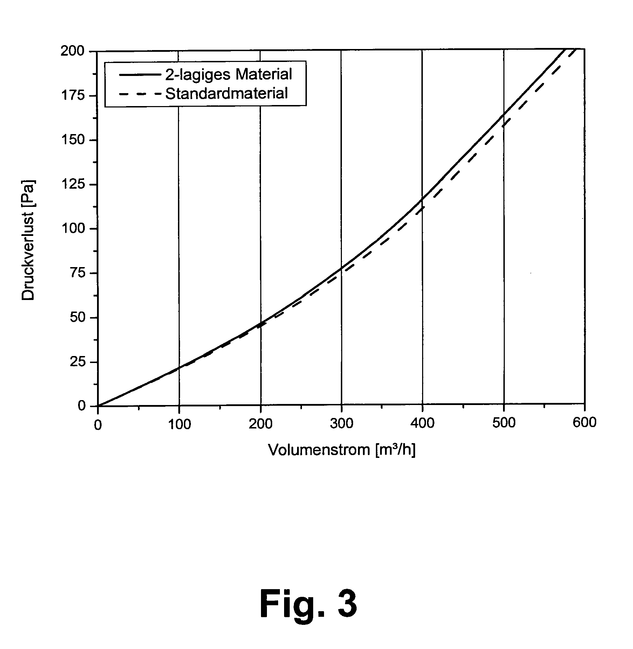

Tabelle 2 zeigt den Druckverlust in Pa zwischen Anströmseite und Abströmseite in Abhängigkeit vom Volumenstrom in m³/h, wobei ein gefaltetes Filtermedium mit einer Adsorptionslage (Kombifilter) mit einem Kombifilter mit einem mit einer Adsorptionslage versehenen Standardmaterial des Typs AF 935 der Freudenberg Vliesstoffe KG, Weinheim, DE verglichen wird. Die verglichenen Filtermedien wurden als Filterelement 4 gemäß Fig. 9 ausgestaltet. Das Filterelement hatte die Dimension 240x190x22mm. Die Filterfläche A betrug 0,21 m². Fig. 3 zeigt die Werte der Tabelle 2 in einem Diagramm.

**Tabelle 2**

| | **2-lagiges Material** | **Standard** |
|---|---|---|
| **Volumenstrom [m³/h]** | **Druckverlust [Pa]** | **Druckverlust [Pa]** |
| 180 | 37 | 36 |
| 300 | 75 | 72 |
| 420 | 125 | 119 |
| 600 | 211 | 205 |

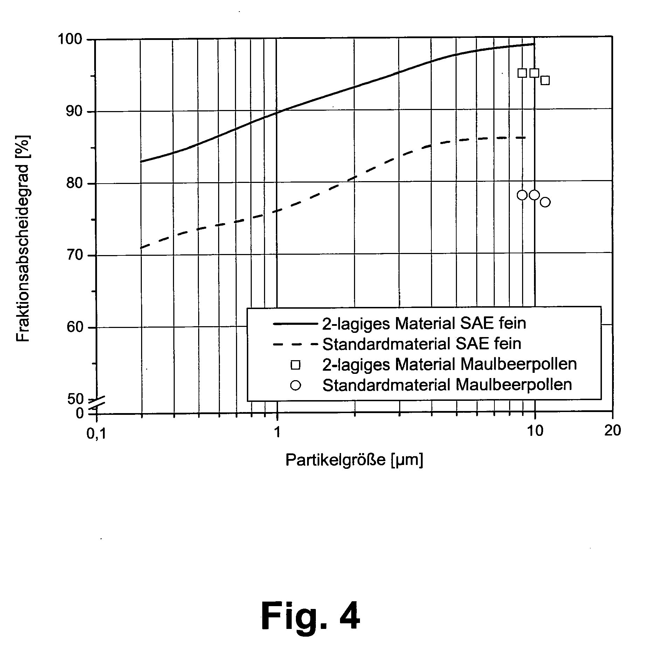

Tabelle 3 zeigt den Fraktionsabscheidegrad (=Abscheidegrad in den Tabellen) von Staub des Typs SAE fein gem. DIN 71460 Teil 1 bei einem Volumenstrom von 300 m³/h. Der jeweilige Partikeldurchmesser des Staubs des Typs SAE fein wurde optisch ermittelt. Es wurden die Fraktionsabscheidegrade eines gefalteten Filtermediums mit Adsorptionslage (Kombifilter) und eines Kombifilters mit einem mit einer Adsorptionslage versehenen Standardmaterial des Typs AF 935 in Abhängigkeit vom optisch ermittelten Partikeldurchmesser (=Partikelgröße im Diagramm) gemessen. Die verglichenen Filtermedien wurden als Filterelement 4 gemäß Fig. 9 ausgestaltet. Fig. 4 zeigt die Werte der Tabelle 3 in einem Diagramm.

**Tabelle 3**

| | **2-lagiges Material** | **Standard** |
|---|---|---|
| **Optischer Partikeldurchmesser [µm]** | **Abscheidegrad [%]** | **Abscheidegrad [%]** |
| 0.3 | 83 | 71 |
| 0.5 | 85 | 74 |
| 1.0 | 90 | 75 |
| 3.0 | 95 | 84 |
| 5.0 | 98 | 86 |
| 10.0 | 99 | 86 |

Ein Filterelement, welches als Kombifilter ausgestaltet ist und ein gefaltetes Filtermedium der hier beschriebenen Art aufweist, ist gekennzeichnet durch einen Fraktionsabscheidegrad in Bezug auf Partikel des Typs SAE fein im Bereich 1 bis 10 µm von mindestens 90% bei einem Druckverlust zwischen Anströmseite und Abströmseite von höchstens 90 Pa bei einem Volumenstrom von 300 m³/h und einer Anströmfläche von 0,21 m².

Das genannte Filterelement ist gekennzeichnet durch einen Fraktionsabscheidegrad in Bezug auf Partikel des Typs SAE fein im Bereich 0,1 bis 1 µm von mindestens 80 % bei einem Druckverlust zwischen Anströmseite und Abströmseite von höchstens 90 Pa bei einem Volumenstrom von 300 m³/h und einer Anströmfläche von 0,21 m².

Tabelle 4 zeigt den Fraktionsabscheidegrad von Maulbeerpollen gem. DIN 71460 Teil 1 bei einem Volumenstrom von 300 m³/h. Der jeweilige Partikeldurchmesser der Maulbeerpollen wurde optisch ermittelt. Es wurden die Fraktionsabscheidegrade eines gefalteten Filtermediums mit Adsorptionslage (Kombifilter) und eines Kombifilters mit einem mit einer Adsorptionslage versehenen Standardmaterial des Typs AF 935 in Abhängigkeit vom optisch ermittelten Partikeldurchmesser (=Partikelgröße im Diagramm) gemessen. Fig. 4 zeigt ein Diagramm, in dem die Werte der Tabellen 3 und 4 aufgetragen und gegenübergestellt sind. Die verglichenen Filtermedien befanden sich in einem Filterelement 4 gemäß Fig. 9.

**Tabelle 4**

| | **2-lagiges Material** | **Standard** |
|---|---|---|
| **Optischer Partikeldurchmesser [µm]** | **Abscheidegrad [%]** | **Abscheidegrad [%]** |
| 9 | 95 | 79 |
| 10 | 95 | 79 |
| 11 | 94 | 77 |

Ein Filterelement, welches als Kombifilter ausgestaltet ist und ein gefaltetes Filtermedium der hier beschriebenen Art aufweist, ist gekennzeichnet durch einen Fraktionsabscheidegrad in Bezug auf Maulbeerpollen der Größe 10 µm von mindestens 95% bei einem Druckverlust zwischen Anströmseite und Abströmseite von höchstens 90 Pa bei einem Volumenstrom von 300 m³/h und einer Anströmfläche von 0,21 m².

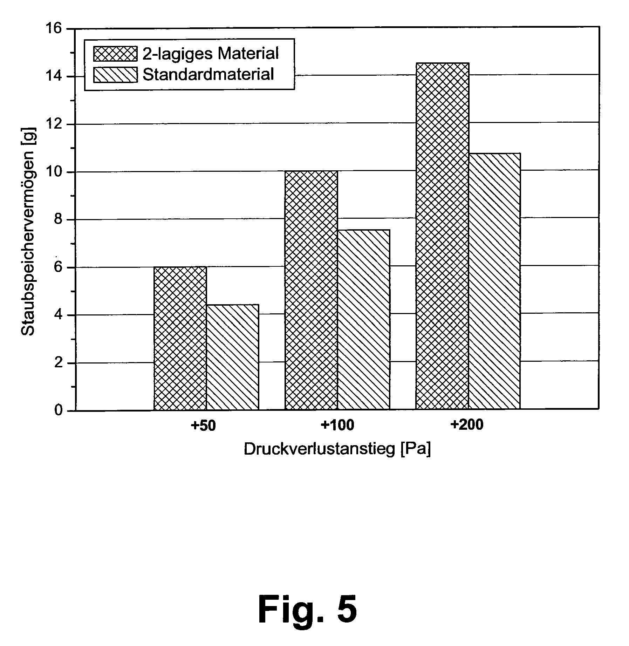

Tabelle 5 zeigt das Staubspeichervermögen in g eines Staubs des Typs SAE fein gem. DIN 71460 Teil 1 bei einem Volumenstrom von 360 m³/h. Es wurde das Staubspeichervermögen eines gefalteten Filtermediums mit Adsorptionslage (Kombifilter) bei bestimmten Druckverlustanstiegen in Pa gemessen und mit den Werten eines Kombifilters mit einem mit einer Adsorptionslage versehenen Standardmaterial des Typs AF 935 verglichen. Fig. 5 zeigt die Werte der Tabelle 5 in einem Balkendiagramm.

**Tabelle 5**

| | **2-lagiges Material** | **Standard** |
|---|---|---|
| **Druckverlustanstieg [Pa]** | **SSV [g]** | **SSV [g]** |
| +50 Pa | 6,0 | 4,4 |
| +100 Pa | 10,0 | 7,5 |
| +200 Pa | 14,5 | 10,7 |

Ein Filterelement, welches als Partikelfilter ausgestaltet ist und ein gefaltetes Filtermedium der hier beschriebenen Art aufweist, ist gekennzeichnet durch ein Staubspeichervermögen in Bezug auf Staub des Typs SAE fein von 10 g bei einem Druckverlustanstieg zwischen Anströmseite und Abströmseite von höchstens 100 Pa bei einem Volumenstrom von 360 m³/h und einer Anströmfläche von 0,21 m².

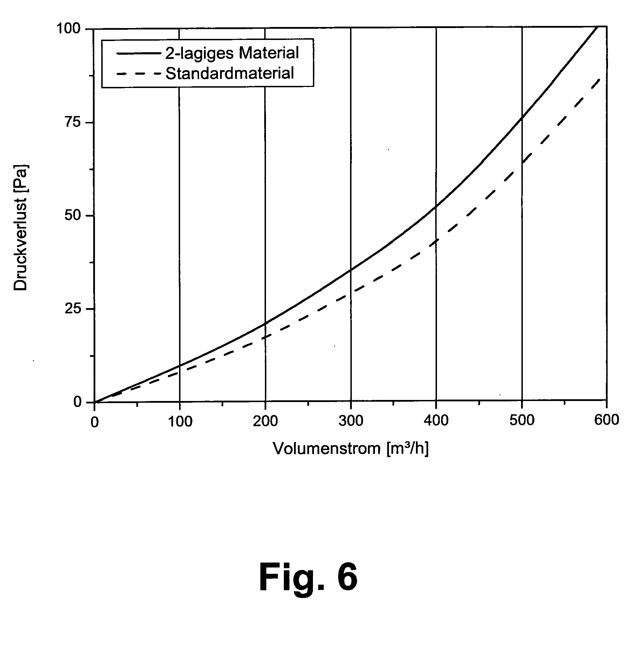

Tabelle 6 zeigt den Druckverlust in Pa zwischen Anströmseite und Abströmseite in Abhängigkeit vom Volumenstrom in m³/h, wobei ein gefaltetes, zweilagiges Filtermedium (Partikelfilter) mit einem Partikelfilter mit einem Standardmaterial des Typs AF 933 der Freudenberg Vliesstoffe KG, Weinheim, DE verglichen wird. Die verglichenen Filtermedien waren in einem Filterelement gemäß Fig. 9 der Dimension 250x200x30 mm aufgenommen. Die Filterfläche A betrug 0,56 m². Fig. 6 zeigt die Werte der Tabelle 6 in einem Diagramm.

**Tabelle 6**

| | **2-lagiges Material** | **Standard** |
|---|---|---|
| **Volumenstrom [m³/h]** | **Druckverlust [Pa]** | **Druckverlust [Pa]** |
| 180 | 17 | 20 |
| 300 | 35 | 40 |
| 420 | 58 | 65 |
| 600 | 103 | 115 |

Tabelle 7 zeigt den Fraktionsabscheidegrad von Staub des Typs SAE fein gem. DIN 71460 Teil 1 bei einem Volumenstrom von 300 m³/h. Der jeweilige Partikeldurchmesser des Staubs des Typs SAE fein wurde optisch ermittelt. Es wurden die Fraktionsabscheidegrade eines gefalteten, zweilagigen Filtermediums (Partikelfilter) und eines Partikelfilters mit Standardmaterial des Typs AF 933 in Abhängigkeit vom optisch ermittelten Partikeldurchmesser gemessen.

**Tabelle 7**

| | **2-lagiges Material** | **Standard** |
|---|---|---|
| **Optischer Partikeldurchmesser [µm]** | **Abscheidegrad [%]** | **Abscheidegrad [%]** |
| 0.3 | 92 | 88 |
| 0.5 | 94 | 90 |
| 1.0 | 96 | 92 |
| 3.0 | 98 | 96 |
| 5.0 | 99 | 97 |
| 10.0 | 100 | 98 |

Ein Filterelement, welches als Partikelfilter ausgestaltet ist und ein gefaltetes Filtermedium der hier beschriebenen Art aufweist, ist gekennzeichnet durch einen Fraktionsabscheidegrad in Bezug auf Partikel im Bereich 1 bis 10 µm von mindestens 90% bei einem Druckverlust zwischen Anströmseite und Abströmseite von höchstens 60 Pa bei einem Volumenstrom von 300 m³/h und einer Anströmfläche von 0,56 m².

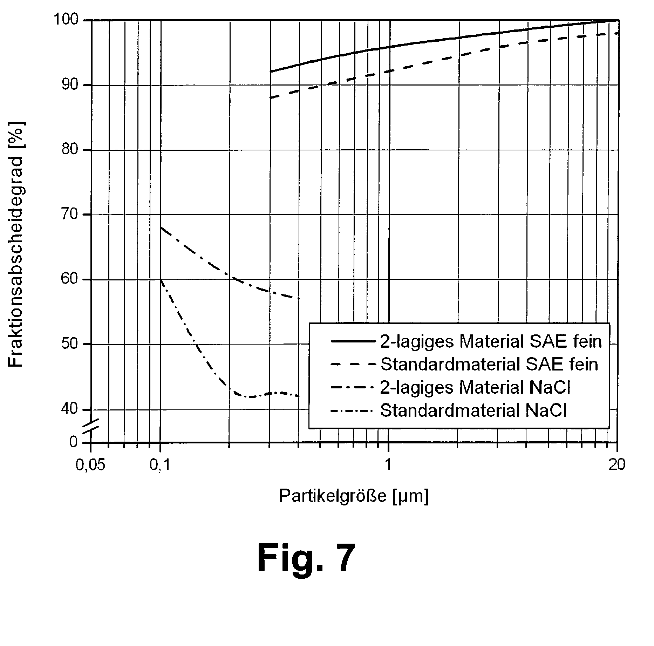

Tabelle 8 zeigt den Fraktionsabscheidegrad von NaCl gem. DIN 71460 Teil 1 bei einem Volumenstrom von 300 m³/h. Der jeweilige Partikeldurchmesser des NaCl wurde optisch ermittelt. Es wurden die Fraktionsabscheidegrade eines gefalteten, zweilagigen Filtermediums (Partikelfilter) und eines Partikelfilters mit einem Standardmaterial des Typs AF 933 in Abhängigkeit vom optisch ermittelten Partikeldurchmesser (=Partikelgröße im Diagramm) gemessen. Fig. 7 zeigt ein Diagramm, in dem die Werte der Tabellen 7 und 8 aufgetragen und gegenübergestellt sind. Obwohl NaCl nicht in dem Maße wie Staub des Typs SAE elektrisch geladen ist, werden dennoch sehr gute Fraktionsabscheidegrade erzielt.

**Tabelle 8**

| | **2-lagiges Material** | **Standard** |
|---|---|---|
| **Optischer Partikeldurchmesser [µm]** | **Abscheidegrad [%]** | **Abscheidegrad [%]** |
| 0,1 | 68 | 60 |
| 0,2 | 60 | 40 |
| 0,3 | 58 | 43 |
| 0,4 | 57 | 42 |

Ein Filterelement, welches als Partikelfilter ausgestaltet ist und ein gefaltetes Filtermedium der hier beschriebenen Art aufweist, ist gekennzeichnet durch einen Fraktionsabscheidegrad in Bezug auf NaCl-Partikel im Bereich 0,1 bis 0,4 µm von mindestens 57% bei einem Druckverlust zwischen Anströmseite und Abströmseite von höchstens 40 Pa bei einem Volumenstrom von 300 m³/h und einer Anströmfläche von 0,56 m².

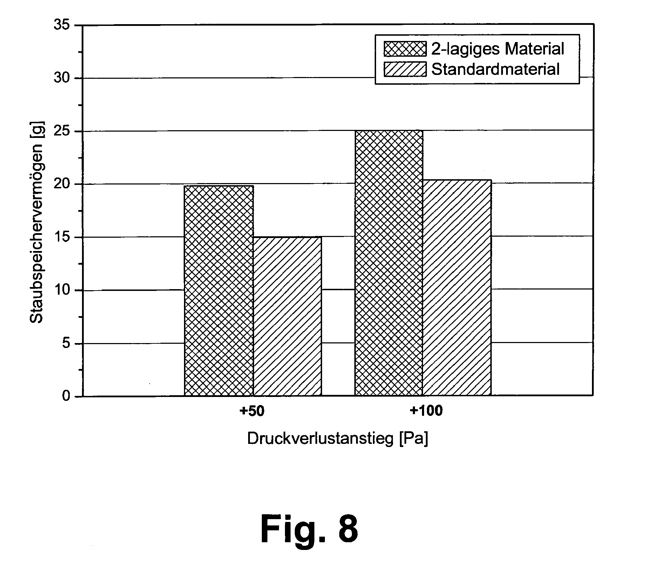

Tabelle 9 zeigt das Staubspeichervermögen in g eines Staubs des Typs SAE fein gem. DIN 71460 Teil 1 bei einem Volumenstrom von 300 m³/h. Es wurde das Staubspeichervermögen eines gefalteten, zweilagigen Filtermediums (Partikelfilter) bei bestimmten Druckverlustanstiegen in Pa gemessen. Die Werte des Partikelfilters mit dem hier beschriebenen Filtermedium wurden mit den Werten verglichen, die bei einem Partikelfilter mit einem Standardmaterial des Typs AF 933 gemessen wurden. Fig. 8 zeigt die Werte der Tabelle 9 in einem Balkendiagramm.

**Tabelle 9**

| | **2-lagiges Material** | **Standard** |
|---|---|---|
| **Druckverlustanstieg [Pa]** | **SSV [g]** | **SSV [g]** |
| +50 Pa | 19,8 | 14,9 |
| +100 Pa | 25,0 | 20,3 |
| +200 Pa | 32,3 | |

Ein Filterelement, welches als Partikelfilter ausgestaltet ist und ein gefaltetes Filtermedium der hier beschriebenen Art aufweist, ist gekennzeichnet durch ein Staubspeichervermögen in Bezug auf Staub des Typs SAE fein von 25 g bei einem Druckverlustanstieg zwischen Anströmseite und Abströmseite von höchstens 100 Pa bei einem Volumenstrom von 300 m³/h und einer Anströmfläche von 0,56 m².

Fig. 9 zeigt schematisch ein Filterelement 4, welches aus einem gefalteten Filtermedium der hier beschriebenen Art gefertigt ist. Das Filtermedium kann aus einer Trägerlage 1 und einer Mikrofaserlage 2 bestehen. Das Filtermedium kann aus einer Trägerlage 1, einer Mikrofaserlage 2 und einer Adsorptionslage 3 bestehen.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Filtermedium, umfassend eine Trägerlage (1) und eine auf dieser aufgebrachte Mikrofaserlage (2), wobei die Mikrofaserlage (2) zweite Fasern aufweist, die als endlose Meltblownfasern ausgestaltet sind, wobei die Trägerlage (1) erste Fasern aufweist, die als endlose Bikomponentenfasern und Spinnvliesfasern ausgestaltet sind, **dadurch gekennzeichnet, dass** die Trägerlage (1) eine Dicke von 0,6 bis 2,0 mm aufweist und dass die Trägerlage (1) eine Porosität von mindestens 70 %, bevorzugt von mindestens 80 %, und dass die Mikrofaserlage (2) eine Porosität von mindestens 70 %, bevorzugt größer 80 %, aufweist.

2. Filtermedium nach Anspruch 1, **dadurch gekennzeichnet, dass** die Bikomponentenfasern eine erste Komponente aus einem ersten Polypropylen und eine zweite Komponente aus einem zweiten Polypropylen aufweisen, wobei die Polypropylene unterschiedliche Schmelzpunkt zeigen.

3. Filtermedium nach Anspruch 1 oder 2, **dadurch gekennzeichnet, dass** die Meltblownfasern aus Polypropylen gefertigt sind.

4. Filtermedium nach einem der Ansprüche 1 bis 3, **dadurch gekennzeichnet, dass** die Trägerlage (1) erste Fasern mit einem mittleren Durchmesser aufweist, der im Bereich 20 µm bis 50 µm liegt.

5. Filtermedium nach einem der Ansprüche 1 bis 4, dadurchgekennzeichnet, dass die Mikrofaserlage (2) zweite Fasern mit einem mittleren Durchmesser aufweist, der im Bereich 1 µm bis 15 µm liegt.

6. Filtermedium nach einem der Ansprüche 1 bis 5, **dadurch gekennzeichnet, dass** die Mikrofaserlage (2) ein Flächengewicht bis höchstens 20 g/m², bevorzugt von 1 g/m² bis höchstens 20 g/m², besonders bevorzugt von 1g/m² bis höchstens 10 g/m², aufweist.

7. Filtermedium nach einem der Ansprüche 1 bis 6, **gekennzeichnet durch** eine Höchstzugkraft in Machine-Direction von mindestens 250 N und eine Höchstzugkraft in Cross-Machine-Direction von mindestens 100 N.

8. Filtermedium nach einem der Ansprüche 1 bis 7, **gekennzeichnet durch** eine Adsorptionslage (3), welche das Filtermedium als Kombifilter ausrüstet.

9. Filtermedium nach einem der Ansprüche 1 bis 8, **dadurch gekennzeichnet, dass** die Trägerlage (1) und/ oder die Mikrofaserlage (2) elektrostatisch geladen ist/ sind.

10. Filtermedium nach einem der Ansprüche 8 bis 9, **dadurch gekennzeichnet, dass** die Adsorptionslage (3) eine Vliesstofflage aufweist, die elektrostatisch geladen ist.

11. Filtermedium nach einem der Ansprüche 1 bis 10, **gekennzeichnet durch** eine Luftdurchlässigkeit von mindestens 1700 l/(min*m²) bei einer Druckdifferenz von 200 Pa zwischen Anströmseite und Abströmseite.

12. Filterelement, umfassend ein gefaltetes Filtermedium nach einem der Ansprüche 1 bis 11.

13. Anordnung, umfassend ein Filtermedium nach einem der Ansprüche 1 bis 11 oder ein Filterelement nach Anspruch 12, wobei die Trägerlage (1) anströmseitig und die Mikrofaserlage (2) abströmseitig angeordnet sind.

## Claims

1. Filter medium, comprising a carrier layer (1) and a microfiber layer (2) applied to this,
wherein the microfiber layer (2) has second fibers which are configured as endless melt-blown fibers, wherein the carrier layer (1) has first fibers which are configured as endless bicomponent fibers and spunbonded fibers, **characterized in that** the carrier layer (1) has a thickness of 0.6 to 2.0 mm and **in that** the carrier layer (1) has a porosity of at least 70%, preferably of at least 80%, and **in that** the microfiber layer (2) has a porosity of at least 70%, preferably of greater than 80%.

2. Filter medium according to Claim 1, **characterized in that** the bicomponent fibers have a first component composed of a first polypropylene and a second component composed of a second polypropylene, the polypropylenes having a different melting point.

3. Filter medium according to Claim 1 or 2, **characterized in that** the melt-blown fibers are manufactured from polypropylene.

4. Filter medium according to one of Claims 1 to 3, **characterized in that** the carrier layer (1) has first fibers with a mean diameter which lies in the range of 20 µm to 50 µm.

5. Filter medium according to one of Claims 1 to 4, **characterized in that** the microfiber layer (2) has second fibers with a mean diameter which lies in the range of 1 µm to 15 µm.

6. Filter medium according to one of Claims 1 to 5, **characterized in that** the microfiber layer (2) has a weight per unit area for up to at most 20 g/m², preferably of 1 g/m² to at most 20 g/m², especially preferably of 1 g/m² to at most 10 g/m².

7. Filter medium according to one of Claims 1 to 6, **characterized by** a maximum of tensile force in the machine direction of at least 250 N and a maximum of tensile force in the cross-machine direction of at least 100 N.

8. Filter medium according to one of Claims 1 to 7, **characterized by** an adsorption layer (3) which finishes the filter medium as a combination filter.

9. Filter medium according to one of Claims 1 to 8, **characterized in that** the carrier layer (1) and/or the microfiber layer (2) are/is electrostatically charged.

10. Filter medium according to either of Claims 8 and 9, **characterized in that** the adsorption layer (3) has a nonwoven layer which is electrostatically changed.

11. Filter medium according to one of Claims 1 to 10, **characterized by** an air permeability of at least 1700 l/(min*m²) in the case of a pressure difference of 200 Pa between the inflow side and the outflow side.

12. Filter element, comprising a folded filter medium according to one of Claims 1 to 11.

13. Arrangement, comprising a filter medium according to one of Claims 1 to 11 or a filter element according to Claim 12, the carrier layer (1) being arranged on the inflow side and the microfiber layer (2) on the outflow side.

## Revendications

1. Milieu filtrant, comprenant une couche support (1) et une couche de microfibres (2) appliquée sur celle-ci, la couche de microfibres (2) comprenant des secondes fibres qui sont configurées sous la forme de fibres filaments obtenues par fusion-soufflage, la couche support (1) comprenant des premières fibres qui sont configurées sous la forme de fibres filaments bicomposantes et de fibres de tissu non-tissé, **caractérisé en ce que** la couche support (1) présente une épaisseur de 0,6 à 2,0 mm, et **en ce que** la couche support (1) présente une porosité d'au moins 70 %, de préférence d'au moins 80 %, et **en ce que** la couche de microfibres (2) présente une porosité d'au moins 70 %, de préférence de plus de 80 %.

2. Milieu filtrant selon la revendication 1, **caractérisé en ce que** les fibres bicomposantes comprennent un premier composant en un premier polypropylène et un second composant en un second polypropylène, les polypropylènes présentant un point de fusion différent.

3. Milieu filtrant selon la revendication 1 ou 2, **caractérisé en ce que** les fibres obtenues par fusion-soufflage sont en polypropylène.

4. Milieu filtrant selon l'une quelconque des revendications 1 à 3, **caractérisé en ce que** la couche support (1) comprend des premières fibres ayant un diamètre moyen qui se situe dans la plage allant de 20 µm à 50 pm.

5. Milieu filtrant selon l'une quelconque des revendications 1 à 4, **caractérisé en ce que** la couche de microfibres (2) comprend des secondes fibres ayant un diamètre moyen qui se situe dans la plage allant de 1 µm à 15 µm.

6. Milieu filtrant selon l'une quelconque des revendications 1 à 5, **caractérisé en ce que** la couche de microfibres (2) présente un poids superficiel de jusqu'à au plus 20 g/m², de préférence de 1 g/m² à au plus 20 g/m², de manière particulièrement préférée de 1 g/m² à au plus 10 g/m².

7. Milieu filtrant selon l'une quelconque des revendications 1 à 6, **caractérisé par** une force de traction maximale dans le sens machine d'au moins 250 N et une force de traction maximale dans le sens travers d'au moins 100 N.

8. Milieu filtrant selon l'une quelconque des revendications 1 à 7, **caractérisé par** une couche d'adsorption (3) qui fait du milieu filtrant un filtre composite.

9. Milieu filtrant selon l'une quelconque des revendications 1 à 8, **caractérisé en ce que** la couche support (1) et/ou la couche de microfibres (2) sont chargées électrostatiquement.

10. Milieu filtrant selon l'une quelconque des revendications 8 à 9, **caractérisé en ce que** la couche d'adsorption (3) comprend une couche de non-tissé qui est chargée électrostatiquement.

11. Milieu filtrant selon l'une quelconque des revendications 1 à 10, **caractérisé par** une perméabilité à l'air d'au moins 1 700 l/(min*m²) à une différence de pression de 200 Pa entre le côté d'entrée et le côté de sortie.

12. Élément filtrant, comprenant un milieu filtrant plié selon l'une quelconque des revendications 1 à 11.

13. Agencement, comprenant un milieu filtrant selon l'une quelconque des revendications 1 à 11 ou un élément filtrant selon la revendication 12, la couche support (1) étant agencée du côté d'entrée et la couche de microfibres (2) du côté de sortie.
